# EUROPÄISCHE PATENTSCHRIFT

(11) **EP 1 198 729 B1**
(45) Veröffentlichungstag und Bekanntmachung des Hinweises auf die Patenterteilung: **02.04.2003**
(21) Anmeldenummer: 00958145.5
(22) Anmeldetag: 18.07.2000
(51) Int. Cl.: G02B 6/38

(54) **LICHTWELLENLEITERSTECKER UND VERFAHREN ZUM ANSCHLUSS AN DAS ENDE EINES LICHTWELLENLEITERS**
OPTICAL-FIBER CONNECTOR AND METHOD OF CONNECTION TO THE END OF AN OPTICAL-FIBER CABLE
CONNECTEUR DE CABLE A FIBRES OPTIQUES ET PROCEDE DE RACCORDEMENT A L'EXTREMITE D'UN CABLE A FIBRES OPTIQUES

(30) Priorität: 19.07.1999 DE 19933740
(43) Veröffentlichungstag der Anmeldung: 24.04.2002
(73) Patentinhaber: CCS Technology, Inc., Wilmington, DE 19803 (US)
(72) Erfinder: ZIMMER, Rainer, D-58579 Schalksmühlen (DE); LIPKA, Bernd, D-58099 Hagen (DE); KRUPP, Helmar, D-58285 Gevelsberg (DE)
(74) Vertreter: Sturm, Christoph, Dipl.-Ing.
(86) Internationale Anmeldenummer: DE0002324
(87) Internationale Veröffentlichungsnummer: WO01006291

(56) Entgegenhaltungen:
- EP-A- 0 939 327
- WO-A-96/31795
- DE-A- 4 307 273
- US-A- 4 877 303
- US-A- 5 363 459

## Beschreibung

Die Erfindung betrifft einen Lichtwellenleiterstecker mit einem werkseitig in einer Ferrule fixierten Lichtwellenleiterstück, wobei das nach außen gerichtete Ende des Lichtwellenleiters mit einer geschliffenen Oberfläche versehen ist und das nach Innen gerichtete Ende aus der Ferrule hervorsteht und durch eine thermisches Schweißung mit dem eingeführten Ende eines anzuschließenden Lichtwellenleiters verbunden ist, wobei außerdem die Ferrule in einem Ferrulenhalter fixiert ist.

Weiterhin betrifft die Erfindung ein Verfahren zum Anschluß dieses Lichtwellenleitersteckers an das Ende eines Lichtwellenleiters.

An sich bekannt sind zwei Gruppen von Steckern, werksmontierte und feldmontierbare Stecker. Mit werksmontierten Stekkern können sehr gute mechanische und optische Eigenschaften erreicht werden. Es können damit alle Arten von Fasern an die entsprechenden Stecker konfektioniert werden. Die Stirnflächen der Stecker können entsprechend den Anforderungen mit allen bekannten Schliffen versehen werden, wie z.B. 0°PC, APC oder UPC. Dabei ist jedoch von Nachteil, daß diese Art von Steckern mit einem Stück Glasfaser versehen werden muß (Pigtail) dessen Länge meist zwischen 2,5 und 3 Metern beträgt. Das Ende dieses Glasfaserstückes wird dann an das anzuschließende Kabel angespleißt. Damit entsteht jedoch eine zusätzliche Verbindung, bzw. Spleißstelle, die eine zusätzliche Dämpfung in die Übertragungsstrecke einbringt. Diese Verbindungsstelle muß dann noch zusätzlich mit einem entsprechenden mechanischen Schutz umgeben werden.

Bei den sogenannten feldmontierbaren Steckern ist von Vorteil, daß das anzuschließende Kabel direkt an den Stecker angeschlossen werden kann. Damit entfällt der zusätzliche Spleiß und auch der zusätzliche mechanische Schutz. Es sind nun mehrere Systeme von feldmontierbaren Steckern bekannt. Bei einem geklebten Stecker wird der Lichtwellenleiter in einer entsprechenden Aufnahme eingeklebt und die Stirnfläche wird anschließend geschliffen und poliert. Dieser Schleif- und Poliervorgang gestaltet sich jedoch bei einigen Schliffarten recht schwierig oder kann gar nicht ausgeführt werden. Bei sogenannten gespleißten Steckern ist eine Synthese von werksmontierten und feldmontierbaren Steckern vorgenommen. Bei diesen Steckern wird der schwierige Teil des Einklebens der Lichtwellenleiter und das Schleifen der Stirnfläche bereits im Werk durchgeführt und das Verbinden, bzw. Anspleißen des anzuschließenden Lichtwellenleiters wird dann vor Ort bei der eigentlichen Feldmontage ausgeführt. Im Prinzip entspricht dieser Steckertyp einem werksmontierten Stecker, doch wird hier kein zusätzlicher Aufwand für das Schützen der Spleißstelle benötigt, weil sich der Spleiß direkt im Stecker befindet. Ein derartiger Steckertyp ist unter dem Namen "FuseLite-Stecker" bekannt. Bei einem derartigen "FuseLite-Stecker" wird eine werksmontierte Ferrule mit einem eingeklebten und stirnseitig verschliffenen Lichtwellenleiter verwendet, bei dem auf der zweiten Stirnseite ein Lichwellenleiterstück übersteht. An dieses Lichtwellenleiterstück wird der anzuschließende Lichtwellenleiter direkt innerhalb des Stekkergehäuses durch thermische Spleißung angesetzt. Dies bedeutet, daß der Stecker in diesem Bereich entsprechende Aussparungen aufweisen muß, durch die der Lichtbogen zur Verschweißung geführt werden muß. Dies bedeutet, daß der Stecker in diesem Bereich aus hochwertigem und äußerst hitzebeständigem Material bestehen muß. Dieses Material darf sich bei den bestehenden hohen Temperaturen nicht verziehen, da sonst die nötige Spleißqualität nicht erreicht werden kann. Als Material wird hierfür hochwertiges Keramik, z.B. Zirkonium, verwendet.

Aus der deutschen Offenlegungsschrift DE 19517750 ist nun ein Lichtwellenleiterstecker bekannt, bei dem in einer Verbindungshülse das Ende eines bereits fest fixierten Lichtwellenleiterstückes mit dem Ende eines anzuschließenden Lichtwellenleiters durch thermische Schweißung verbunden wird. Hierzu sind seitliche Öffnungen in die Verbindungshülse eingearbeitet, durch die die Schweißelektroden an die Spleißstelle herangeführt werden.

Der vorliegenden Erfindung ist im Anspruch 1 definiert.

Weiterhin stellt sich bei der Erfindung die Aufgabe, ein Verfahren zum Anschluß des erfindungsgemäßen Steckers an das Ende eines Lichtwellenleiters zu entwickeln. Diese gestellte Aufgabe wird mit dem Verfahren nach den Merkmalen des Anspruchs 5 gelöst.

Durch den Aufbau des erfindungsgemäßen Lichtwellenleiterstekkers ist als besonderer Vorteil gegenüber dem Stand der Technik hervorzuheben, daß das Anspleißen des in einer Ferrule gehaltenen Lichtwellenleiterstückes mit dem Ende des anzuschließenden Lichtwellenleiters nicht innerhalb eines Stekkergehäuses, sondern separat außerhalb davon ausgeführt werden kann. Zusätzlich ist nun möglich, daß auch ein normales optisches Spleißgerät für die thermische Schweißung der Lichtwellenleiterenden verwendet werden kann. Das bedeutet, daß für das Anspleißen nicht wie bisher üblich ein besonders modifiziertes Spleißgerät eingesetzt werden muß, das auf die Geometrie des Steckergehäuses abgestimmt sein muß. Außerdem findet die Schweißung außerhalb der Ferrule statt, so daß das Material der Ferrule nicht mehr den hohen Temperaturen während des thermischen Schweißvorganges ausgesetzt wird. Nach dem Schweißvorgang erfolgt dann der Zusammenbau des Lichtwellenleitersteckers, wobei zunächst die Ferrule in eine Aufnahme eines Ferrulenhalters eingepresst und dadurch in exakter Lage fixiert wird. Anschließend werden die weiteren Einzelteile des Lichtwellenleitersteckers, die vorher bereits in der entsprechenden Reihenfolge auf den anzuschließenden Lichtwellenleiter aufgeschoben wurden, über der Ferrule und dem Ferrulenhalter positioniert. Die aufwendige Spleißung durch Verschweißung innerhalb des Lichtwellenleitersteckers bzw. einer eigens hierfür modifizierten Ferrule und einem auch eigens hierfür geschaffenen Schweißgerät entfällt somit völlig. Die Spleißung ist somit Routinemontage, wie sie sonst auch bei jeder thermischen Lichtwellenleiterspleißung zwischen zwei Lichtwellenleiterenden durchgeführt wird. Der hierfür beschriebene Aufbau des Lichtwellenleitersteckers kennzeichnet auch gleichzeitig das erfindungsgemäße Verfahren, nach dem der Lichtwellenleiterstecker nach erfolgter thermischer Verschweißung der Lichtwellenleiterenden zusammengebaut wird. Dabei ist bei dem Verfahren besonders von Vorteil, daß die Spleißung vor dem Zusammenbau des Lichtwellenleitersteckers in den durch die Einzelteile vorgegebenen Abständen und Maßen erfolgt. Dadurch sind bereits bei diesem ersten Vorgang alle Positionen der Einzelteile für den Zusammenbau vorgegeben.

Die Erfindung wird nun anhand von vier Figuren näher erläutert.

Figur 1 zeigt den fertig montierten Lichtwellenleiterstecker.

Figur 2 zeigt den Lichtwellenleiterstecker nach Figur 1 in einem Längsschnitt.

Figur 3 zeigt das Basisgehäuse des Lichtwellenleitersteckers mit eingeführter Ferrule.

Figur 4 verdeutlicht den Ablauf des erfindungsgemäßen Verfahrens zur Herstellung der thermischen Verschweißung der Lichtwellenleiterenden und zur Montage des Lichtwellenleiterstekkers.

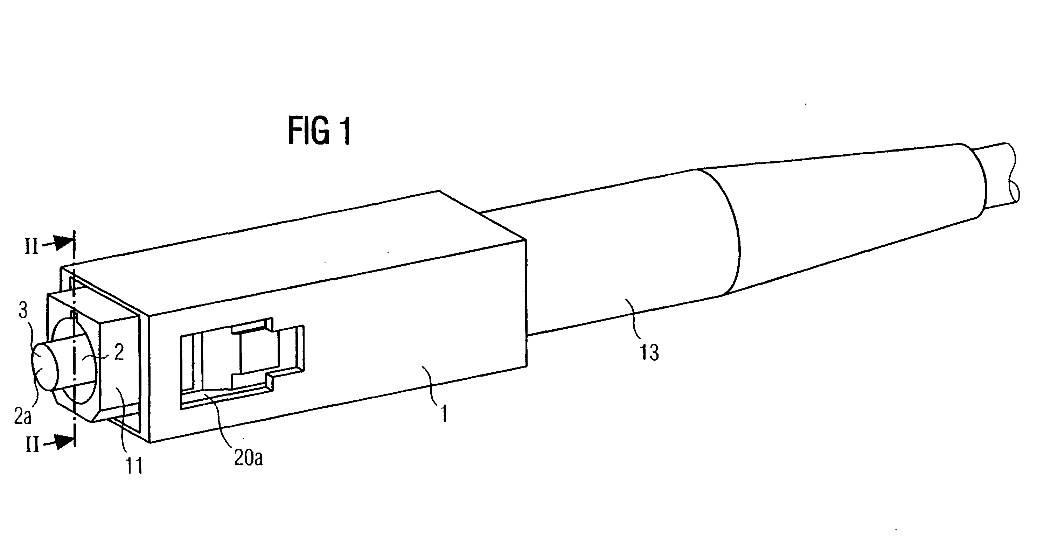

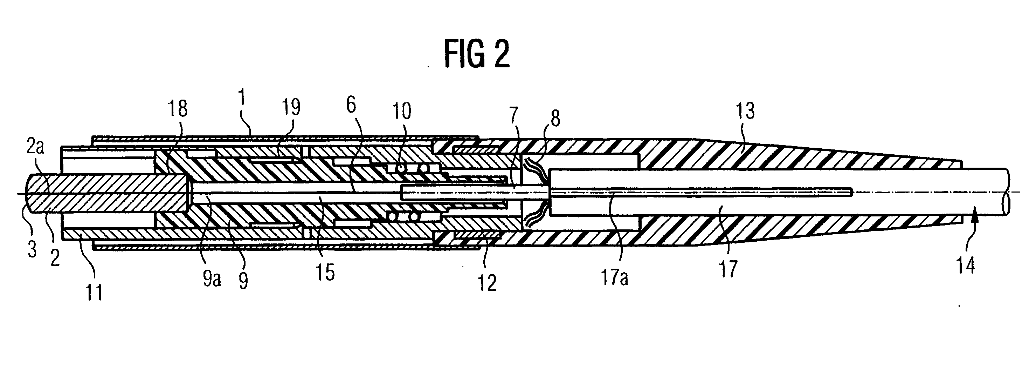

In Figur 1 ist der Lichtwellenleiterstecker gemäß der Erfindung in zusammengebautem Zustand dargestellt. So ist hieraus die in einem Basisgehäuse 11 eingesetzte Ferrule 2 zu erkennen, in der das zum Anspleißen benötigte Lichtwellenleiterstück 2a zentrisch angeordnet ist. Die Stirnflächen 3 der Ferrule 2 und des Lichtwellenleiterstückes 2a sind bereits mit einem geeignetem Schliff, wie z.B. mit einem der an sich bekannten Schliffarten 0°PC, APC, UPC, werksseitig versehen, so daß bei der eigentlichen Steckermontage keine aufwendigen und diffizilen Arbeiten mehr ausgeführt werden müssen. Über dem Basisgehäuse 11 ist ein Außengehäuse 1 aufgesetzt, das mit den entsprechenden Rastelementen 20a zum Fixieren des Lichtwellenleitersteckers versehen ist. Am gegenüberseitigen Ende des Lichtwellenleitersteckers ragt der Knickschutz 13 heraus. Ferner ist ein Schnitt II -II angedeutet, der in Figur 2 erläutert wird.

Die Figur 2 zeigt den gesamten inneren Aufbau des erfindungsgemäßen Lichtwellenleitersteckers, wobei bereits die Lichtwellenleiterverbindung an der Spleißstelle 15 fertiggestellt ist. Daraus geht hervor, daß die Ferrule 2 mit dem bereits werkseitig eingesetzten Lichtwellenleiterstück 2a und der ebenfalls werkseitig mit dem gewünschten Schliff versehenen Stirnfläche 3 nach der erfolgten Spleißung in einer Aufnahme 18 des Ferrulenhalters 9 eingepreßt und dadurch fixiert ist. Innerhalb einer Bohrung 9a des Ferrulen-Halters 9 befinden sich die an der Spleißstelle 15 miteinander verbundenen Enden des Lichtwellenleiterstückes 2a und des anzuschließenden Lichtwellenleiters 6, der im Schweißstellenbereich von seinem Coating 7 befreit ist. Die Zugentlastungselemente 8, z.B. Kevlar-Fäden, des Lichtwellenleiters 14, sind am Ende des Basisgehäuses 11 mit Hilfe eines Krimpringes 12 fixiert. Das Basisgehäuse 11 ist durch federnde Rastelemente 19 mit der Ferrule 9 in seiner Lage gesichert. Auf einem rückseitigen Absatz des Basisgehäuses 11 ist eine Druckfeder 10 aufgezogen, die den erforderlichen Anpreßdruck beim eingeführten Stecker gewährleistet. Weiterhin ist der Knickschutz 13 dargestellt, der unzulässiges Abknicken des eingeführten Lichtwellenleiters 14 verhindert. Außerdem ist erkennbar, daß der Mantel 17 bei der Montage mit Längsschlitzen 17a versehen wurde.

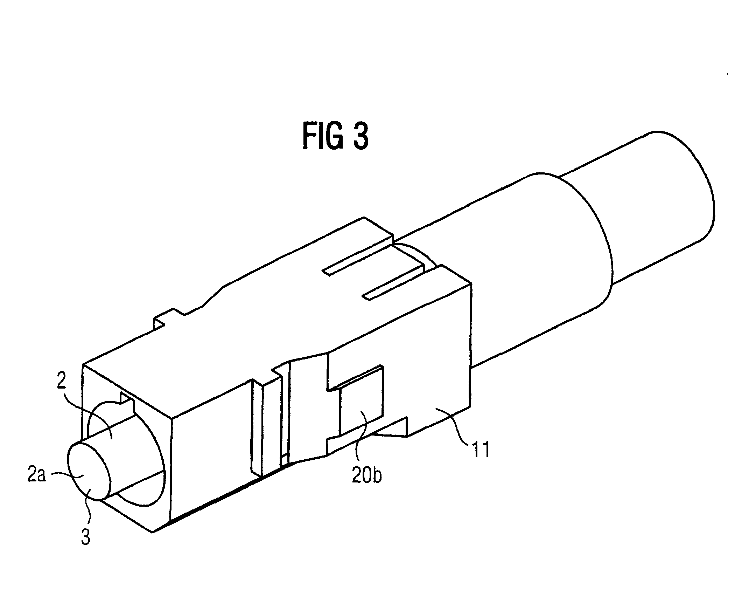

In Figur 3 ist das Basisgehäuse 11 mit einem Rastelement 20b dargestellt, das zum Einrasten in das später umgebende Außengehäuse dient. Ferner ist nochmals die eingesetzte Ferrule 2 mit dem Lichtwellenleiterstück 2a und der geschliffenen Stirnfläche 3 dargestellt.

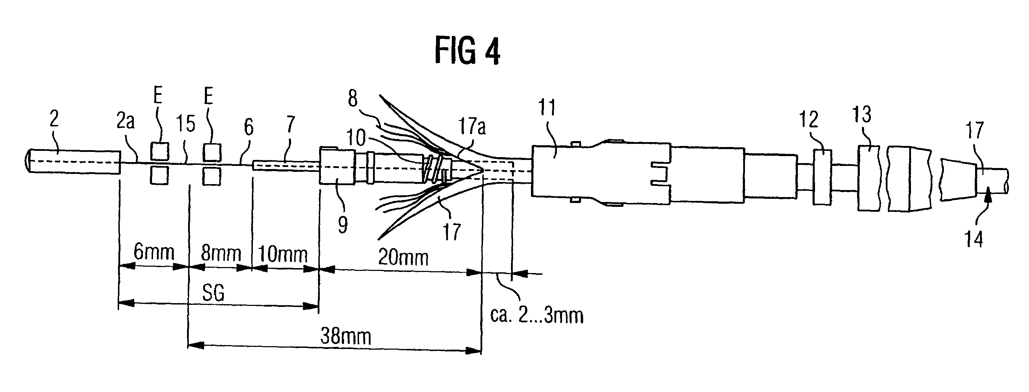

Aus Figur 4 geht hervor, wie die Einzelteile des Lichtwellenleitersteckers zur Montage vor dem Spleißvorgang zusammengestellt werden, so daß durch diese Darstellung auch das erfindungsgemäße Verfahren abgeleitet werden kann. So wird der Mantel 17 des Lichtwellenleiterkabels 14 auf einer Länge von ca. 20 mm mit Längsschlitzen 17a versehen, damit die Zugentlastungselemente 8 des Lichtwellenleiters 14 erfaßt werden können. Außerdem wird der Lichtwellenleiter 14 im Bereich der Schweißstelle 15 ca. 8 mm lang von seinem Coating befreit. Über den Mantel 17 des Lichtwellenleiters 14 wird nun der Reihe nach der Knickschutz 13, der Krimpring 12 und das Basisgehäuse 11 aufgeschoben. Unter dem durch Längsschlitze 17a geöffneten Mantel 17 wird der Ferrulen-Halter 9 mit der rückseitig aufgebrachten Druckfeder 10 aufgeschoben, wobei der Lichtwellenleiter noch ca. 10 mm lang mit seinem Coating 7 hervorsteht. Damit ist der anzuschließende Lichtwellenleiter 14 in einer Gesamtlänge von ca. 38 mm für die Spleißung mit dem Ende des in der Ferrule 2 überstehenden Lichtwellenleiterstückes 2a vorbereitet. Nun wird das mit den Einzelteilen vorbereitete Ende des Lichtwellenleiters 14 in ein ganz normales, an sich bekanntes thermisches Lichtwellenleiterspleißgerät SG, das hier nur symbolhaft dargestellt ist, eingelegt und mit Einspannklemmen E in seiner Lage fixiert. Von der anderen Seite des Lichtwellenleiterspleißgerätes SG wird das in der Ferrule 2 bereits werkseitig fixierte Lichtwellenleiterstück 2a bis zur Spleißstelle 15 dagegen geschoben und ebenfalls mit Einspannklemmen E fixiert, wobei die Länge des überstehenden Lichtwellenleiterstückes 2a ca. 6 mm beträgt. Die Maßangaben in dieser Figur sind nur als Beispiele anzusehen und sind jeweils selbstverständlich dem verwendeten Lichtwellenleiterstecker entsprechend anzupassen. Nachdem nun in der an sich bekannten Weise die thermische Spleißung durchgeführt worden ist, wird der Ferrulenhalter 9 gegen die Ferrule 2 geschoben, wobei letztere in einer Aufnahme 18 (s. Figur 2) eingepreßt und fixiert wird. Damit sind die Spleißstelle 15 und auch die freigelegten Lichtwellenleiterenden geschützt in der Bohrung des Ferrulen-Halters 9 untergebracht. Durch diesen erfindungsgemäßen Aufbau und Montagevorgang ist möglich gemacht, daß ein handelsübliches Lichtwellenleiterspleißgerät verwendet werden kann. Nachfolgend werden dann die restlichen vorher aufgeschobenen Einzelteile über dem Ferrulenhalter 9 angeordnet, wobei zusätzlich durch den Krimpring 12 die Zugentlastungselemente 8 des Lichtwellenleiters 14 auf dem Ferrulenhalter aufgeklemmt und fixiert werden. Zweckmäßig ist noch, wenn der Ferrulenhalter 9 noch ein Stück von ca. 2 bis 3 mm unter den ungeschlizten Kabelmantel 17 eingeschoben wird.

Durch diese erfindungsgemäßen Maßnahmen ist es möglich geworden, daß die Schweißstelle bei der Anspleißung des anzuschließenden Lichtwellenleiters doch innerhalb-des Lichtwellenleitersteckers liegt, ohne daß spezielle Bohrungen bzw. Aussparungen für den Schweißvorgang in der Ferrule vorgesehen werden müssen. Dies vereinfacht die Ferrule ganz erheblich, da erstens kein hochtemperaturfestes Material verwendet werden muß und zweitens eine einfache Hülsenform völlig ausreichend ist. Zusätzlich ist von Vorteil, daß bei diesem Verfahren auch keine Modifizierung oder Neugestaltung von Lichtwellenleiterspleißgeräten benötigt wird.

## Patentansprüche

1. Lichtwellenleiterstecker mit einem werkseitig in einer Ferrule fixierten Lichtwellenleiterstück, wobei das nach außen gerichtete Ende des Lichtwellenleiterstückes mit einer geschliffenen Oberfläche versehen ist und das nach innen gerichtete Ende des Lichtwellenleiterstückes aus der Ferrule hervorsteht und durch eine thermische Schweißung mit dem eingeführten Ende eines anzuschließenden Lichtwellenleiters verbunden ist, wobei außerdem die Ferrule in einem Ferrulen-Halter fixiert ist, und wobei
die Ferrule (2) mit dem fixierten Lichtwellenleiterstück (2a) vor der thermischen Schweißung der Lichtwellenleiterenden vom Ferrulenhalter (9) trennbar ist und
die Ferrule (2) nach der thermischen Schweißung in eine Aufnahme (18) des Ferrulenhalters (9) eingepreßt ist,
**dadurch gekennzeichnet, daß**
daß über dem Ferrulenhalter (9) ein Basisgehäuse (11) mit einer achsial wirkenden Druckfeder (10) angeordnet ist,
daß ein Knickschutz (13) über dem Mantel (17) des anzuschließenden Lichtwellenleiters (14) und dem Ende des Basisgehäuses (11) aufgebracht ist,
daß ein Außengehäuse (1) mit Rastelementen (20a) überdeckend aufgezogen ist und
daß ein Krimpring (12) zur Fixierung der Zugentlastungselemente (8) des Lichtwellenleiters (14) auf dem Basisgehäuse (11) aufgepresst ist.

2. Lichtwellenleiterstecker nach Anspruch 1,
**dadurch gekennzeichnet,**
**daß** das Basisgehäuse (11) mit Hilfe von Rastelementen (19) auf dem Ferrulenhalter (9) fixiert ist.

3. Lichtwellenleiterstecker nach einem der vorhergehenden Ansprüche,
**dadurch gekennzeichnet,**
**daß** die Enden des Lichtwellenleiterstückes (2a) und des anzuschließenden Lichtwellenleiters (6) mit der dazwischen liegenden Schweißstelle (15) innerhalb der Längsbohrung (9a) der Ferrulenhalter (9) geschützt geführt sind.

4. Lichtwellenleiterstecker nach einem der vorhergehenden Ansprüche,
**dadurch gekennzeichnet,**
**daß** das Außengehäuse (1) mit Rastelementen (20a) versehen ist, die mit denen von Steckeraufnahmen korrenspondierend wirken.

5. Verfahren zum Anschluß des Lichtwellenleitersteckers nach einem der vorhergehenden Ansprüche an das Ende eines anzuschließenden Lichtwellenleiters,
**dadurch gekennzeichnet,**
**daß** zunächst der Knickschutz (13), der Krimpring (12) und das Basisgehäuse (11) auf dem Mantel (17) des anzuschließenden Lichtwellenleiters (14) aufgeschoben wird,
**daß** der Mantel (17) des Lichtwellenleiters (14) durch mindestens einen Längsschlitz (17a) in der für den Lichtwellenleiterstecker erforderlichen Länge geschlitzt wird,
**daß** das Ende (6) des Lichtwellenleiters (14) in der für die Spleißung erforderlichen Länge vom Coating (7) befreite wird, daß der Ferrulenhalter (9) mit der am Ende aufgesetzten Druckfeder (10) auf den Lichtwellenleiter (14) aufgeschoben wird,
**daß** das aus der Ferrule (2) überstehende Ende des Lichtwellenleiterstücks (2a) und das Ende (6) des anzuschließenden Lichtwellenleiters (14) in einem an sich bekannten thermischen Lichtwellenleiterspleißgerät (SG) mit einander verbunden werden,
**daß** danach die Ferrule (2) in die stirnseitige Aufnahme (18) des Ferrulenhalters (9) eingepresst wird,
**daß** das Basisgehäuse (11) darüber geschoben und fixiert wird,
**daß** der Krimpring (12) über den Zugentlastungselementen (8) des Lichtwellenleiters (14) aufgepresst wird,
**daß** der Knickschutz (13) am Basisgehäuse (11) fixiert wird, und daß das Außengehäuse (1) über die montierte Steckereinheit aufgezogen wird.

## Revendications

1. Connecteur de câble à fibres optiques avec un segment de câble à fibres optiques fixé en usine dans un manchon, dans lequel l'extrémité du segment de câble à fibres optiques orientée vers l'extérieur est pourvue d'une surface polie et l'extrémité du segment de câble à fibres optiques orientée vers l'intérieur sort du manchon et est assemblée par une soudure thermique à l'extrémité introduite d'un câble à fibres optiques à raccorder, dans lequel le manchon est par ailleurs fixé dans un support de manchon, et dans lequel le manchon (2) avec le segment de câble à fibres optiques (2a) fixé peut être séparé du support de manchon (9) avant le soudage thermique des extrémités du câble à fibres optiques et le manchon (2) est inséré dans un logement (18) du support de manchon (9) après le soudage thermique, **caractérisé en ce qu'**un boîtier de base (11) avec un ressort de pression agissant axialement (10) est disposé au-dessus du support de manchon (9), **en ce qu'**une protection contre le pliage (13) est placée au-dessus de la surface latérale (17) du câble à fibres optiques (14) à raccorder et de l'extrémité du boîtier de base (11), **en ce qu'**un boîtier extérieur (1) avec des éléments d'accrochage (20a) est enfilé en recouvrement et **en ce qu'**une bague serrante (12) est pressée sur le boîtier de base (11) en vue de la fixation des éléments de décharge de traction (8) du câble à fibres optiques (14).

2. Connecteur de câble à fibres optiques suivant la revendication 1, **caractérisé en ce que** le boîtier de base (11) est fixé sur le support de manchon (9) à l'aide d'éléments d'accrochage (19).

3. Connecteur de câble à fibres optiques suivant l'une quelconque des revendications précédentes, **caractérisé en ce que** les extrémités du segment de câble à fibres optiques (2a) et du câble à fibres optiques à raccorder (6) avec la zone de soudage (15) située entre celles-ci sont menées sous protection à l'intérieur de l'alésage longitudinal (9a) du support de manchon (9).

4. Connecteur de câble à fibres optiques suivant l'une quelconque des revendications précédentes, **caractérisé en ce que** le boîtier extérieur (1) est pourvu d'éléments d'accrochage (20a), qui opèrent en correspondance avec ceux de logements du connecteur.

5. Procédé pour le raccordement du connecteur de câble à fibres optiques suivant l'une quelconque des revendications précédentes à l'extrémité d'un câble à fibres optiques à raccorder, **caractérisé en ce que** l'on enfile d'abord la protection contre le pliage (13), la bague serrante (12) et le boîtier de base (11) sur la surface latérale (17) du câble à fibres optiques à raccorder (14), **en ce que** l'on fend la surface latérale (17) du câble à fibres optiques (14) par au moins une fente longitudinale (17a) sur la longueur nécessaire pour le connecteur de câble à fibres optiques, en ce l'on débarrasse de sa gaine (7) l'extrémité (6) du câble à fibres optiques (14) sur la longueur nécessaire pour la ligature, **en ce que** l'on glisse le support de manchon (9) avec le ressort de pression (10) appliqué à l'extrémité sur le câble à fibres optiques (14), **en ce que** l'on raccorde-l'une à l'autre l'extrémité du segment de câble à fibres optiques (2a) sortant du manchon (2) et l'extrémité (6) du câble à fibres optiques à raccorder (14) dans un appareil thermique de liaison de câbles à fibres optiques (SG) connu en soi, **en ce que** l'on insère ensuite le manchon (2) dans le logement frontal (18) du support de manchon (9), **en ce que** l'on glisse et on fixe le boîtier de base (11) au-dessus de celui-ci, **en ce que** l'on presse la bague serrante (12) sur les éléments de décharge de traction (8) du câble à fibres optiques (14), **en ce que** l'on fixe la protection contre le pliage (13) sur le boîtier de base (11), et **en ce que** l'on enfile le boîtier extérieur (1) sur l'unité de connecteur assemblée.

## Claims

1. Optical conductor connector having an optical conductor piece fixed in the factory in a ferrule, the end of the optical conductor piece directed outwards being provided with a ground surface, and the end of the optical conductor piece directed inwards projecting from the ferrule and being connected by thermal welding to the inserted end of an optical conductor to be connected, the ferrule further being fixed in a ferrule holder, and it being possible for the ferrule (2) with the fixed optical conductor piece (2a) to be detached from the ferrule holder (9) before the thermal welding of the optical conductor ends, and the ferrule (2) being pressed into a receptacle (18) of the ferrule holder (9) after the thermal welding, **characterized in that** a basic housing (11) with an axially operating compression spring (10) is arranged over the ferrule holder (9), **in that** an anti-kink guard (13) is applied over the cladding (17) of the optical conductor (14) to be connected, and over the end of the basic housing (11), **in that** an outer housing (1) with latching elements (20a) is drawn on as a cover, and **in that** a crimping ring (12) for fixing the stress member (8) of the optical conductor (14) is pressed on the basic housing (11).

2. Optical conductor connector according to Claim 1, **characterized in that** the basic housing (11) is fixed on the ferrule holder (9) with the aid of latching elements (19).

3. Optical conductor connector according to one of the preceding claims, **characterized in that** the ends of the optical conductor piece (2a) and of the optical conductor (6) to be connected are guided in a protected fashion with the welding point (15) lying therebetween inside the longitudinal bore (9a) of the ferrule holder (9).

4. Optical conductor connector according to one of the preceding claims, **characterized in that** the outer housing (1) is provided with latching elements (20a) which act correspondingly with those of connector receptacles.

5. Method for connecting the optical conductor connector according to one of the preceding claims to the end of an optical conductor to be connected, **characterized in that** firstly the anti-kink guard (13), the crimping ring (12) and the basic housing (11) are pushed onto the cladding (17) of the optical conductor (14) to be connected, **in that** the cladding (17) of the optical conductor (14) is slotted by at least one longitudinal slot (17a) to the length required for the optical conductor connector, **in that** the end (6) of the optical conductor (14) is freed from the coating (7) to the length required for the splicing, **in that** the ferrule holder (9) with the compression spring (10) mounted on the end is pushed onto the optical conductor (14), **in that** the end of the optical conductor piece (2a) projecting from the ferrule (2), and the end (6) of the optical conductor (14) to be connected are connected to one another in a thermal optical conductor splicer (SG) known per se, **in that** thereafter the ferrule (2) is pressed into the end-face receptacle (18) of the ferrule holder (9), **in that** the basic housing (11) is pushed thereover and fixed, **in that** the crimping ring (12) is pressed on over the stress member (8) of the optical conductor (14), **in that** the anti-kink guard (13) is fixed on the basic housing (11), and **in that** the outer housing (1) is drawn on over the mounted connector unit.
